# FASCICULE DE BREVET EUROPEEN

(11) **EP 2 029 932 B1**
(45) Date de publication et mention de la délivrance du brevet: **15.08.2012**
(21) Numéro de dépôt: 07823509.0
(22) Date de dépôt: 08.06.2007
(51) Int. Cl.: F16L 33/04

(54) **COLLIER DE SERRAGE.**
KLEMMRING
CLAMPING RING

(30) Priorité: 09.06.2006 FR 0652086
(43) Date de publication de la demande: 04.03.2009
(73) Titulaire: Etablissements Caillau, 92130 Issy-les-Moulineaux (FR)
(72) Inventeur: PREVOT, Fabrice, F-41130 Selles-sur-cher (FR); JAFFRE, Jérôme, F-41600 Chaumont Sur Tharonne (FR); RIGOLLET, Nicolas, F-41200 Romorantin (FR)
(74) Mandataire: Besnard, Christophe Laurent
(86) Numéro de dépôt international: PCT/FR2007/051393
(87) Numéro de publication internationale: WO 2008/006990

(56) Documents cités:
- EP-A- 1 195 531
- DE-U- 1 717 978
- GB-A- 592 211
- US-A- 1 584 498

## Description

L'invention a pour objet un collier de serrage.

Un tel collier peut être utilisé pour raccorder des tuyaux, notamment dans le secteur automobile ou aéronautique (par exemple pour raccorder des tuyaux du système d'échappement ou de dépollution des gaz de combustion).

Plus particulièrement, l'invention concerne un collier de serrage du type comprenant :
- une ceinture avec une bande et deux extrémités libres, au moins une de ces extrémités libres étant recourbée de manière à former une boucle, cette boucle étant délimitée par une portion de ceinture extérieure et une portion de ceinture intérieure sous-jacente ; et
- un système de serrage apte à coopérer avec ladite boucle pour serrer ladite ceinture.

Généralement, les deux extrémités libres de ladite ceinture sont recourbées de manière à former une boucle, et ledit système de serrage permet de rapprocher lesdites boucles l'une de l'autre pour serrer ladite ceinture.

Le document DE 3926626 A1 décrit une connexion pour tuyaux avec deux colliers de serrage de ce type. Chacun de ces colliers est tel que les extrémités de la ceinture sont recourbées vers l'extérieur du collier, puis soudées sur la face extérieure de la bande de la ceinture, de manière à former des boucles. En outre, chaque collier comprend un système de serrage avec deux pièces de retenue cylindriques, logées respectivement à l'intérieur des deux boucles du collier. Ces pièces de retenue sont communément appelées tourillons.

Le premier tourillon est traversé par un trou taraudé et le deuxième tourillon est traversé par un trou lisse. Le système de serrage comprend une vis avec tige filetée et tête de vis. Chaque boucle du collier présente deux ouvertures en regard l'une de l'autre, de sorte que la tige de la vis traverse chacune des deux boucles. En outre, la tige de la vis traverse librement le trou lisse et s'engage dans le trou taraudé. Lorsqu'on visse la vis dans le premier tourillon, la tête de vis vient en prise avec le deuxième tourillon qui pousse alors contre la portion de ceinture intérieure d'une boucle, tandis que le premier tourillon pousse contre la portion de ceinture intérieure de l'autre boucle. On obtient ainsi le serrage du collier par rapprochement desdites boucles. Les documents EP 1195 531 A1 et DE 1717978 décrivent des colliers ayant un fonctionnement analogue.

L'invention a pour objectif de proposer un collier de serrage du type précité qui soit dépourvu de tourillon, de manière à limiter le nombre de pièces du collier et, ainsi, simplifier son assemblage, et/ou diminuer son coût de fabrication, tout en conservant de bonnes performances de serrage.

Cet objectif est atteint par un collier de serrage selon la revendication 1, dans lequel au moins une extrémité libre de la ceinture formant une boucle est recourbée vers l'intérieur du collier, dans lequel la portion de ceinture intérieure de la boucle se prolonge au delà de la boucle, sous ladite bande, et dans lequel la portion de ceinture extérieure de chaque boucle présente une paroi de serrage avec laquelle le système de serrage vient en prise.

Le système de serrage venant en prise avec la paroi de serrage de la portion de ceinture extérieure, la présence d'un tourillon à l'intérieur de chaque boucle n'est pas nécessaire.

En outre, avec le collier de l'invention, contrairement au collier de DE 3926626 A1, les efforts exercés sur la boucle par le système de serrage ne s'exercent plus sur la portion de ceinture intérieure, par l'intérieur de la boucle, mais sur la portion de ceinture extérieure, par l'extérieur de la boucle. Pour tenir compte de cette nouvelle répartition des efforts, les extrémités sont recourbées vers l'intérieur du collier de sorte que la bande de la ceinture se prolonge par la portion de ceinture extérieure (et non par la portion de ceinture intérieure comme dans DE 3926626 A1).

Pour simplifier la fabrication du collier et, notamment, ne pas avoir à effectuer de soudures, ladite portion de ceinture intérieure n'est pas fixée sous ladite bande.

Ceci est possible car, d'une part, les efforts de serrage s'exercent sur la portion de ceinture extérieure de la boucle et, d'autre part, lors du serrage du collier, ladite portion de ceinture Intérieure est immobilisée en étant comprimée entre l'objet à serrer et la bande qui la recouvre. En effet, lors du serrage du collier, des forces de frottement naissent entre l'objet à serrer, ladite portion de ceinture intérieure et la bande. Ces forces de frottement peuvent être suffisantes pour empêcher tout déplacement de la portion de ceinture intérieure et s'opposer, ainsi, à la déformation (écrasement) de la boucle.

Si, toutefois, ces forces de frottement se révèlent insuffisantes, on prévoit une butée pour empêcher la portion de ceinture intérieure de se déplacer le long de la bande (c'est-à-dire suivant la direction circonférentielle de la ceinture), lors du serrage du collier. Selon un exemple de réalisation simple, cette butée est formée par un épaulement réalisé sur la bande et contre lequel la portion de ceinture intérieure vient en butée, lors du serrage du collier. En outre, un épaulement de hauteur sensiblement égale à l'épaisseur de la portion de ceinture intérieure permet d'assurer la continuité du contour de serrage du collier.

Bien entendu, on pourrait envisager d'autres types de butées, par exemple un ergot ou une nervure faisant saillie sur la face intérieure de la bande, ou encore un ergot ou une nervure solidaires de la portion de ceinture intérieure, faisant saillie à l'intérieur de la boucle et venant en butée contre la base de la portion de ceinture extérieure.

L'invention et ses avantages seront mieux compris à la lecture de la description détaillée qui suit, de plusieurs exemples de colliers selon l'invention. Cette description fait référence aux figures annexées, sur lesquelles :
- les figures 1 et 2 représentent un premier exemple de collier ;
- la figure 3 représente un deuxième exemple de collier ;
- la figure 4 représente un troisième exemple de collier ;
- les figures 5 et 6 représentent un quatrième exemple de collier ;
- la figure 7 représente un cinquième exemple de collier ;
- la figure 8 représente un sixième exemple de collier ; et
- la figure 9 représente un septième exemple de collier.

Les exemples de colliers des figures présentent de nombreuses caractéristiques communes. Ces caractéristiques communes sont décrites ci-après et repérées sur les figures par les mêmes références numériques.

Chaque collier de serrage comprend une ceinture avec une bande 3 et deux extrémités libres. Chacune de ces extrémités libres est recourbée vers l'intérieur du collier, de manière à former une boucle 5. Chaque boucle 5 est donc délimitée par une portion de ceinture extérieure 7, qui prolonge la bande 3, et une portion de ceinture intérieure sous-jacente 9, qui revient sous la bande 3. Ladite portion de ceinture intérieure se prolonge au delà de la boucle 5, sous une portion P de la bande 3. Le long de la portion de bande P, le collier présente donc une double épaisseur de bande.

La portion de ceinture intérieure 9 n'est pas fixée (elle n'est ni soudée, ni collée, ni rivetée...) à la bande 3. En d'autres termes, la portion de ceinture intérieure 9 est en libre contact avec la bande 3 et seule la raideur de la boucle 5 empêche d'écarter la portion de ceinture intérieure 9 de la portion de bande P.

Avantageusement, la face intérieure de la bande 3 présente un épaulement 45, juste en amont de la portion de bande P. L'amont et l'aval sont définis dans la présente demande par rapport au sens de l'effort exercé par le système de serrage sur la boucle considérée.

Vu de l'intérieur du collier, de l'aval vers l'amont de la bande 3, l'épaulement 45 forme une marche montante. Ainsi, la portion de ceinture intérieure 9 vient en butée contre cet épaulement 45, lors du serrage du collier. En outre, la hauteur de l'épaulement 45 est au moins sensiblement égale à l'épaisseur de la portion de ceinture intérieure 9 de sorte que cette dernière ne fait pas saillie par rapport à la face intérieure de la bande 3. Si la portion de ceinture intérieure 9 faisait saillie, elle risquerait d'endommager l'objet à serrer. Dans les exemples, la hauteur de l'épaulement 45 est sensiblement égale à l'épaisseur de la portion de ceinture intérieure 9, ce qui permet d'obtenir une ceinture avec un contour de serrage continu.

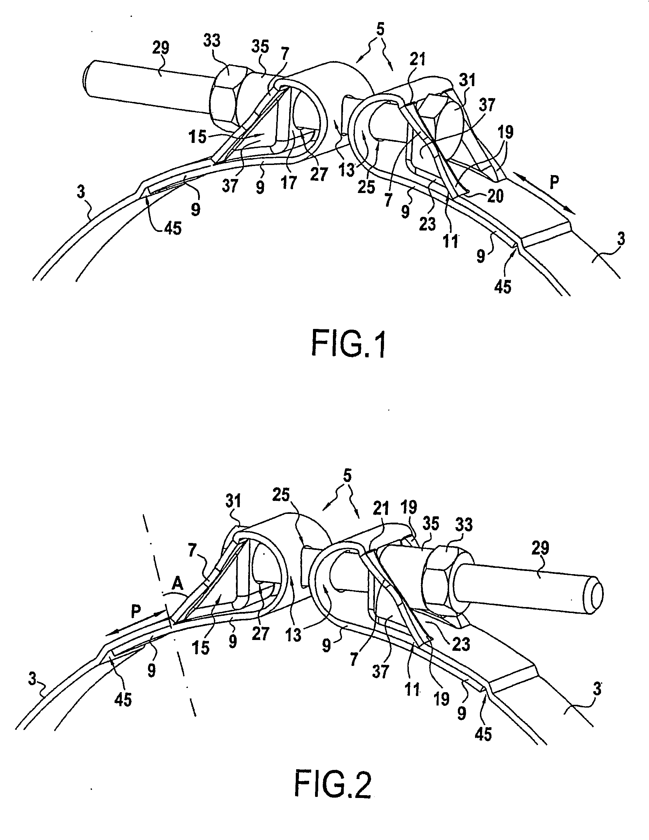

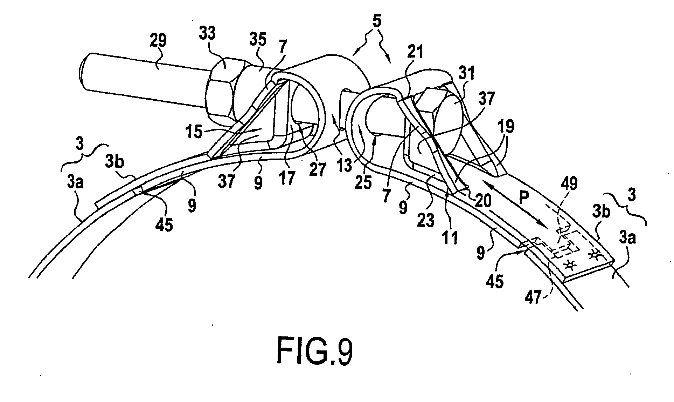

Cet épaulement peut être réalisé de différentes manière. Sur les figures 1 à 8, il est réalisé par emboutissage de la bande 3. Sur la figure 9, il est réalisé en fixant les boucles 5 sur une portion de bande principale 3a.

On définit la base 11 de la boucle 5 comme étant la zone de la boucle la plus proche de la bande 3, et l'extrémité 13 de la boucle 5 comme étant la zone de la boucle opposée à cette base 11 (i.e. la zone la plus éloignée de la bande 3). La portion de ceinture intérieure 9 s'étend au-delà de la base 11 de la boucle 5, en amont de celle-ci.

En position de serrage maximum du collier, l'espace entre les extrémités 13 des boucles 5 est minimum.

Chaque collier comprend également un système de serrage qui sera décrit plus loin.

La portion de ceinture extérieure 7 présente une partie enfoncée 15, en retrait par rapport au contour extérieur de la boucle 5. Cette partie enfoncée définit une paroi de serrage 17 contre laquelle le système de serrage vient en appui. En outre, cette partie enfoncée est bordée latéralement par deux segments de bord 19 de la portion de ceinture extérieure 7.

Chaque segment de bord est sensiblement rectiligne et joint un premier point 20 de la portion de ceinture extérieure situé juste en amont de la partie enfoncée 15, à un deuxième point 21 de la portion de ceinture extérieure situé juste en aval de la partie enfoncée 15. Le premier point 20 est généralement proche de la base 11 de la boucle et, avantageusement, au niveau de cette base 11. Le segment de bord 19 joue mécaniquement le rôle d'un hauban, tendu entre l'amont et l'aval de la partie enfoncée 15, et retient la partie de la boucle 5 située en aval de la paroi de serrage 17 afin d'éviter que celle-ci se déforme lors du serrage

Les exemples de colliers de serrage représentés présentent une section de forme générale circulaire. Alors, avantageusement, la paroi de serrage 17 est orientée sensiblement radialement, tandis que les segments de bord 19 forment avec un rayon du collier un angle A supérieur à 30°. En effet, les segments de bord 13 retiennent d'autant mieux la partie de la boucle située en aval de la paroi de serrage 17, que l'angle A est grand.

La paroi de serrage 17 est sensiblement plane. La partie enfoncée 15 présente éventuellement une autre paroi 23 sensiblement plane qui fait face à la paroi de serrage 17 et forme un angle non nul avec cette dernière. Les parois 17 et 23 forment la paroi de fond de la partie enfoncée 15.

Dans les exemples, la paroi 23 est en appui contre la portion de ceinture intérieure 9. La paroi de serrage 17 étant orientée sensiblement radialement, l'angle formé entre les parois 17 et 23 est donc proche de 90° (il est d'autant plus proche de 90° que le rayon du collier est important). Lorsque la paroi 23 est en appui sur la portion de ceinture intérieure 9, elle joue le rôle de patin de répartition des efforts radiaux, exercés par le système de serrage sur la portion de ceinture intérieure 9. Ensuite, la portion de ceinture intérieure 9 répartit à son tour lesdits efforts radiaux sur l'objet à serrer.

Selon un autre aspect des colliers de l'invention, chaque boucle 5 présente deux ouvertures 25 et 27 en regard l'une de l'autre. La première ouverture 27 est ménagée dans la paroi de serrage 17. La deuxième ouverture 25 est ménagée au niveau de l'extrémité 13 de la boucle 5. De plus, le système de serrage du collier (décrit plus loin) comprend une tige 29 apte à être engagée dans ces ouvertures 25 et 27, de manière à traverser chacune des boucles 5.

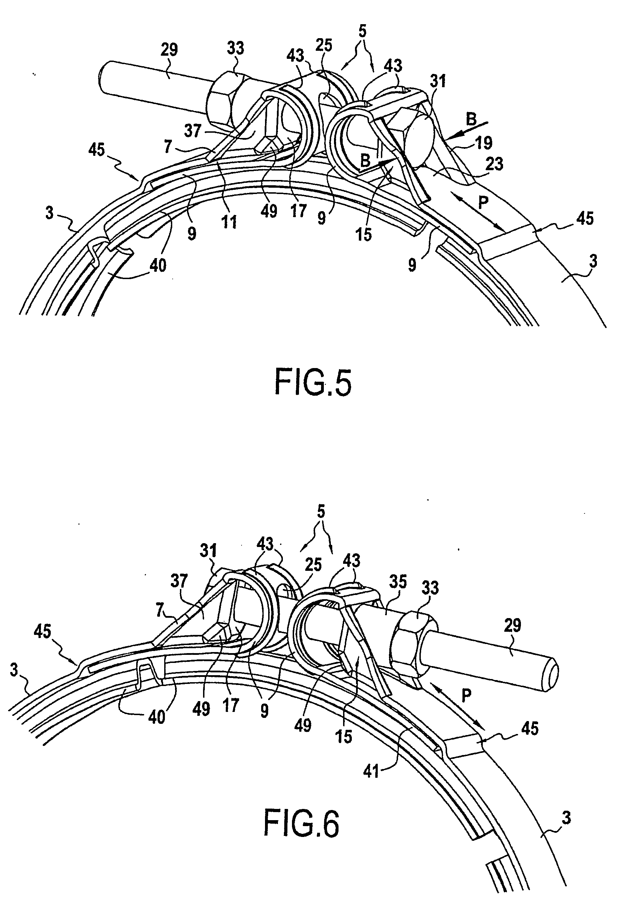

Lorsqu'on souhaite utiliser le même collier pour des objets à serrer de diamètres différents, il faut que la tige 29 du système de serrage puisse se déplacer radialement par rapport aux extrémités 13 des boucles 5. Pour autoriser un tel déplacement radial, les deuxièmes ouvertures 25 sont oblongues, leur plus grande longueur étant orientée radialement (voir figures 5 à 8). Si nécessaire, les premières ouvertures 27 peuvent également être oblongues.

Nous allons maintenant décrire le système de serrage utilisé pour tous les colliers représentés. On notera que d'autres systèmes pourraient être utilisés, du moment qu'ils viennent en prise contre les parois de serrage 17 et qu'ils permettent de rapprocher les boucles 5 l'une de l'autre.

Le système de serrage considéré comprend un ensemble vis/écrou comportant une vis avec tige filetée 29 et tête de vis 31, un écrou 33, et une entretoise 35 ayant, ici, une forme de manchon. Le diamètre de la vis est choisi tel que celle-ci puisse traverser les ouvertures 27. En revanche, le diamètre de la tête de vis 31 et celui de l'entretoise 35 sont choisis tels que ceux-ci ne puissent pas traverser les ouvertures 27. Dans l'exemple, l'entretoise 35 est disposée entre l'écrou 33 et la ceinture, mais elle pourrait être disposée entre la tête de vis 31 et la ceinture. En outre, l'entretoise 35 peut être distincte, ou solidaire, de l'écrou 33 ou de la tête de vis 31.

Ainsi, la tête de vis 31 et l'écrou 33, via l'entretoise 35, viennent en prise sur les parois de serrage 17 des boucles 5. L'entretoise 35 est utilisé pour pouvoir maintenir l'écrou 33 ou la tête de vis en dehors de la partie enfoncée 15, et ainsi permettre de manoeuvre facilement cet écrou à l'aide d'un outil. La présence de l'entretoise 35 est, bien entendu, optionnelle. Par exemple, aucune entretoise 35 n'est nécessaire lorsque la partie enfoncée 15 est de largeur suffisante pour pouvoir manoeuvrer l'écrou 33 (ou la tête de vis 31), ou lorsque l'écrou (ou la tête de vis) est suffisamment long et ressort de la partie enfoncée 15.

Par ailleurs, on notera que la forme et les dimensions de la partie enfoncée 15 sont choisies, avantageusement, de manière à bloquer la tête de vis 31 ou l'écrou 33 en rotation. Ainsi, on n'a pas à maintenir la tête de vis ou l'écrou, lors du vissage de l'ensemble vis/écrou.

Nous allons maintenant décrire les particularités de chacun des exemples de colliers représentés sur les figures 1 à 7.

Le premier exemple de collier représenté sur les figures 1 et 2 est tel que la partie enfoncée 15 présente deux parois latérales 37 qui rejoignent les segments de bord 19. Ces parois latérales 37 s'étendent donc entre les parois 17 et 23, qui forment la paroi de fond de la partie enfoncée 15, et les segments de bord 19 situés à la surface de la partie enfoncée 15 et de chaque côté de celle-ci.

Dans la pratique, la partie enfoncée 15 est réalisée par emboutissage de la portion de ceinture extérieure 7.

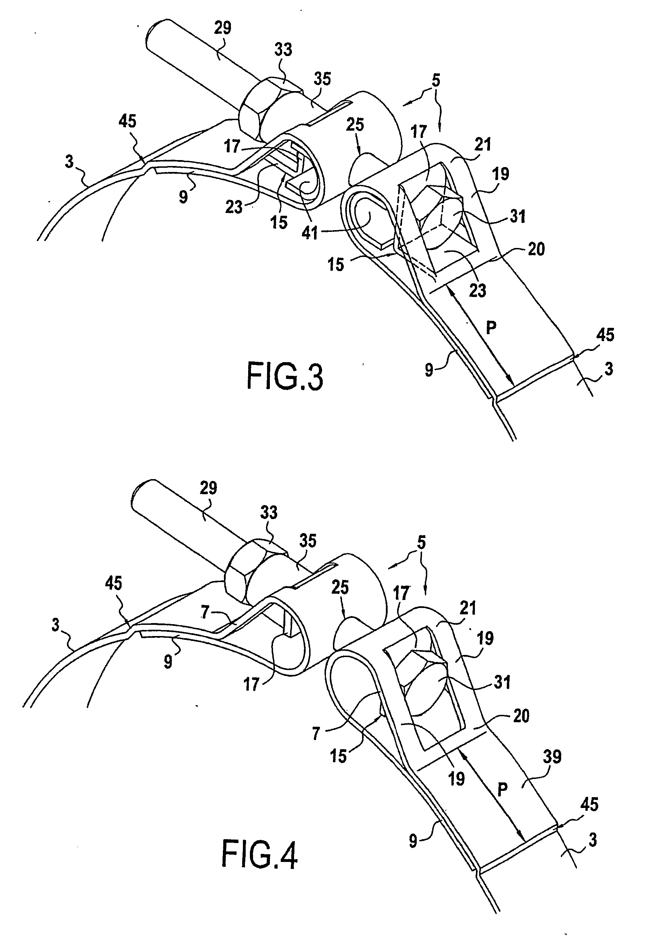

Le deuxième exemple de collier représenté sur la figure 3 est tel que la partie enfoncée 15 est découpée dans la portion de ceinture extérieure 7 de manière à être séparée des segments de bord 19. Ce collier est donc dépourvu de paroi latérale 37 et présente, à la place, des évidements. Les découpes réalisées sont uniquement des découpes latérales faites le long des segments de bord 19, de sorte que la partie enfoncée 15 présente une paroi de fond, formée par les parois 17 et 23, qui est reliée au reste de la portion de ceinture extérieure 7 par son bord amont et son bord aval.

Dans la pratique, la partie enfoncée 15 est réalisée par emboutissage de la portion de ceinture extérieure 7.

Le collier de la figure 3 comprend, en outre, des inserts de renfort 41. Chaque insert 41 est disposé dans l'espace ménagé à l'intérieur de la boucle 5, entre la paroi de serrage 17 et l'extrémité 13 de la boucle, et épouse le contour intérieur de cet espace.

Ces inserts 41 s'opposent à une déformation (un écrasement) des boucles 5 sous l'action des moyens de serrage. Le système de serrage ne vient pas en prise sur ces inserts 41, qui ne sont donc pas comparables aux tourillons de l'art antérieur.

Contrairement aux tourillons de l'art antérieur, les inserts 41 n'ont pas besoin d'être des pièces suffisamment rigides (le plus souvent pleines) pour transmettre des efforts de serrage. Ainsi, dans l'exemple, les inserts 41 sont réalisés par découpage et mise en forme d'une bande métallique. Avantageusement, cette bande est la même que celle utilisée pour le collier, de sorte que le coût de fabrication du collier reste limité.

Dans l'exemple, chaque insert 41 présente la forme d'une gouttière dont le fond est disposé contre l'extrémité 13 de la boucle 5, et dont les extrémités libres sont disposées contre la paroi de serrage 17.

Le troisième exemple de collier, représenté sur la figure 4, est analogue à celui de la figure 3 aux seules différences que :
- pour réaliser la partie enfoncée 15, on découpe une languette dans la portion de ceinture extérieure et on enfonce cette languette pour qu'elle forme la paroi de serrage 17. La partie enfoncée 15 présente une paroi de fond formée par la seule parois 17 (elle est dépourvue de paroi 23), qui est reliée au reste de la portion de ceinture extérieure 7 par son bord aval uniquement ; et
- le collier de la figure 4 ne comprend pas d'insert 41.

On notera que la ceinture du collier de la figure 4, doit être suffisamment rigide au niveau de la languette 17 pour que celle-ci ne s'enfonce pas à l'intérieur de la boucle 5 lors du serrage.

Le quatrième exemple de collier, représenté sur les figures 5 et 6, est tel qu'une portion de ceinture, située au niveau de l'extrémité 13 de la boucle 5, présente deux nervures 43 de renfort orientées circonférenciellement et situées sur les bords de cette portion. Ces nervures 43 permettent de renforcer la tenue mécanique de la boucle 5 afin d'empêcher sa déformation (son écrasement) sous l'action des moyens de serrage. Ces nervures 43 sont réalisées par emboutissage de la ceinture.

La partie enfoncée 15 du collier des figures 5 et 6 est telle qu'elle présente des parois latérales 37 (comme le collier des figures 1 et 2); et telle que la paroi de serrage 17 et la paroi 23 définissent entre elles une ligne d'intersection. De plus, la partie enfoncée 15 présente des facettes 49 dans les zones de jonction entre la ligne d'intersection et les parois latérales 37. Ces facettes 49 sont réalisées lors de la formation de la partie enfoncée 15 par emboutissage.

Les facettes 49 permettent de limiter le phénomène de rétrécissement, repéré par les flèches B, localisé dans la partie médiane des bras 19, et ayant lieu lors de l'emboutissage. En effet, grâce aux facettes 49, la quantité de matière enfoncée au niveau de ladite ligne d'intersection est moindre, de sorte que la diminution de la largeur des segments de bord 19, au droit de cette ligne d'intersection, est également moindre.

Enfin, on notera que plusieurs segments 40 de section en V ou en U, dont la concavité est tournée vers le centre du collier, sont rapportés sur la face intérieure de la bande 3 et d'une des portions de ceinture intérieure 9. Ceci permet, par exemple, d'utiliser le collier pour raccorder bout à bout deux tubes aux extrémités tronconiques.

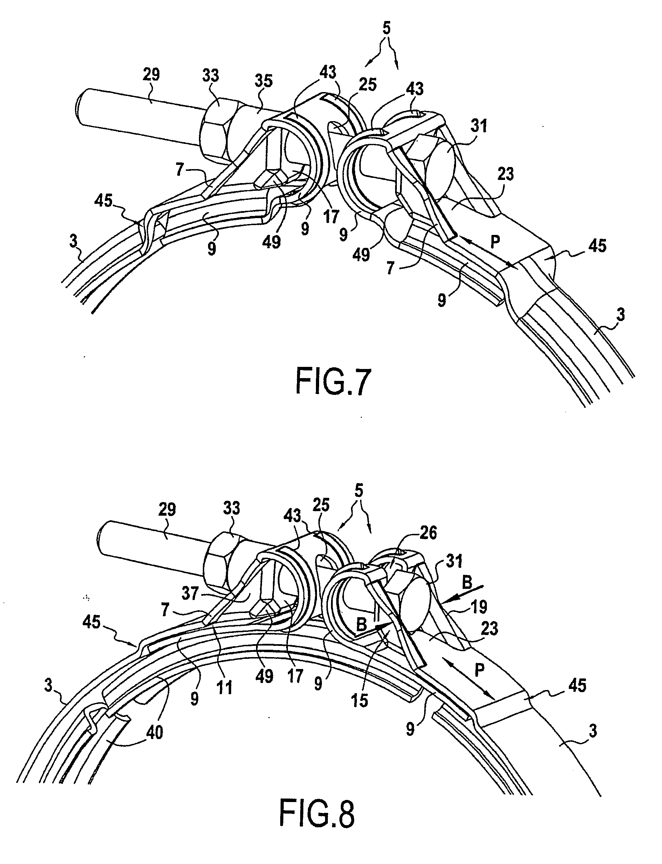

Le cinquième exemple de collier représenté sur la figure 7 est analogue à celui de la figure 6 à la seule différence qu'il ne comprend pas de segments rapportés sur la face intérieure de la bande 3, car c'est la bande elle-même qui présente une section en V ou en U dont la concavité est tournée vers le centre du collier. Plus précisément, ce sont les parties de ceinture destinées à venir au contact de l'objet à serrer, c'est-à-dire la partie de la bande 3 située en amont des épaulements 45 et une partie des portions de ceinture intérieures 9, qui présentent une telle section.

Le sixième exemple de collier représenté sur la figure 8 est analogue à celui des figures 4 et 5, à la seule différence que les ouvertures 25 et 27 de la boucle 5 recevant la tête de vis 31, sont une seule et même ouverture oblongue 26 s'étendant depuis la paroi de serrage 17 jusqu'à l'extrémité 13 de la boucle 5. Bien entendu, l'ouverture oblongue 26 pourrait être réalisée, en alternative, dans la boucle 5 recevant l'écrou 33 ou dans les deux boucles 5. Ceci permet d'ouvrir facilement le collier en dégageant radialement la tige 29 de la vis, de la (ou des) boucle(s) 5 concernée(s), et donc de poser plus facilement le collier sur l'objet à serrer.

Le septième exemple de collier, représenté sur la figure 9, est analogue à celui de la figure 3 à la seule différence que l'épaulement 45 est réalisé différemment.

Selon cet exemple, chaque boucle 5 est réalisée séparément du reste de la ceinture et comprend une patte de fixation 3b, prolongée par ladite portion de ceinture extérieure 7, elle-même prolongée par ladite portion de ceinture intérieure 9. La patte de fixation 3b est donc en amont de la portion de ceinture extérieure 7. Par ailleurs, la patte de fixation 3b recouvre une partie de la portion de ceinture intérieure 9 (sur la portion P) et va au delà, en amont, de celle-ci. L'extrémité de la patte de fixation 3b située au-delà de la portion de ceinture intérieure 9, est fixée, par exemple par soudage, sur la face extérieure d'une portion de bande principale 3a. Une fois reliées, la patte de fixation 3b et la portion de bande principale 3a forment la bande 3 du collier. Un épaulement 45 est ainsi formé à l'extrémité de la portion de bande principale 3a. La hauteur de cet épaulement 45 correspond à l'épaisseur de la portion de bande principale 3a.

Avantageusement, on prévoit des moyens de guidage pour conserver l'alignement de la portion de ceinture intérieure 9 avec la bande 3. Dans l'exemple de la figure 9, ces moyens de guidage sont prévus au niveau de l'épaulement 45 et comprennent une échancrure 47 ménagée à l'extrémité libre de la portion de bande principale 3a. Cette échancrure 47 coopère avec une partie en saillie 49 de forme complémentaire, formée à l'extrémité libre de la portion de ceinture intérieure 9. Lors du serrage, la partie en saillie 49 coulisse dans l'échancrure 47 et de ce fait, la portion de ceinture intérieure 9 est guidée dans l'alignement de la portion de bande principale 3a. Selon une alternative, l'échancrure pourrait être ménagée à l'extrémité libre de la portion de ceinture intérieure 9 et la partie en saillie être formée à l'extrémité libre de la portion de bande principale 3a.

Lorsque l'épaulement 45 est réalisé par déformation (emboutissage) de la bande 3, comme c'est le cas sur les figures 1 à 8, on réalise également l'échancrure 47 par déformation de la bande, avantageusement en même temps que l'épaulement 45.

D'autres types de moyens de guidage pourraient être envisagés, notamment des crochets faisant saillies sur les bords latéraux de la portion de ceinture intérieure 9, recourbés au dessus de la patte de fixation 3b.

Enfin, on notera que le mode de réalisation du collier de la figure 9 permet de fabriquer des boucles 5 identiques, en série, pour ensuite les fixer sur des portions de bande principale 3a de tailles (i.e. de diamètres) différentes et, ainsi, obtenir des ceintures de tailles différentes.

## Revendications

1. Collier de serrage comprenant :
- une ceinture avec une bande (3) et deux extrémités libres, au moins une de ces extrémités libres étant recourbée de manière à former une boucle (5), cette boucle étant délimitée par une portion de ceinture extérieure (7) et une portion de ceinture intérieure (9) sous-jacente ; et
- un système de serrage apte à coopérer avec ladite boucle pour serrer ladite ceinture,
dans lequel ladite au moins une extrémité libre forme une boucle recourbée vers l'intérieur du collier, ladite portion de ceinture intérieure (9) se prolongeant au delà de la boucle (5), sous ladite bande (3),
ce collier étant **caractérisé en ce que** ladite portion de ceinture extérieure (7) présente une paroi de serrage (17) avec laquelle le système de serrage vient en prise, de sorte que les efforts exercés sur la boucle par le système de serrage s'exercent sur la portion de ceinture extérieure, par l'extérieur de la boucle, et **en ce que** ladite portion de ceinture intérieure (9) n'est pas fixée sous ladite bande (3).

2. Collier de serrage selon la revendication 1, dans lequel les deux extrémités libres de ladite ceinture sont recourbées de manière à former une boucle (5), et dans lequel ledit système de serrage permet de rapprocher lesdites boucles (5) l'une de l'autre pour serrer ladite ceinture.

3. Collier de serrage selon la revendication 1 ou 2, dans lequel une seule extrémité libre de ladite ceinture est recourbée de manière à former une boucle (5).

4. Collier de serrage selon l'une quelconque des revendications 1 à 3, comprenant une butée pour empêcher la portion de ceinture intérieure (9) de se déplacer le long de la bande (3), lors du serrage du collier.

5. Collier de serrage selon l'une quelconque des revendications 1 à 4, dans lequel ladite bande (3) présente un épaulement (45) contre lequel ladite portion de ceinture intérieure (9) vient en butée, lors du serrage du collier.

6. Collier de serrage selon la revendication 5, dans lequel la hauteur dudit épaulement (45) est au moins sensiblement égale à l'épaisseur de ladite portion de ceinture intérieure (9).

7. Collier de serrage selon la revendication 5 ou 6 comprenant des moyens de guidage (47, 49) pour conserver l'alignement de la portion de ceinture intérieure (9) avec la bande (3).

8. Collier de serrage selon l'une quelconque des revendications 1 à 7, dans lequel la portion de ceinture extérieure (7) présente une partie enfoncée (15), en retrait par rapport au contour extérieur de la boucle, qui définit ladite paroi de serrage (17).

9. Collier de serrage selon la revendication 8, dans lequel la partie enfoncée (15) est bordée latéralement par deux segments de bord (19) de la portion de ceinture extérieure (7).

10. Collier de serrage selon l'une quelconque des revendications 1 à 9, présentant une section de forme générale circulaire, dans lequel la paroi de serrage (17) est orientée sensiblement radialement.

11. Collier de serrage selon l'une quelconque des revendications 1 à 10, dans lequel ladite boucle (5) présente une première ouverture (27) ménagée dans sa paroi de serrage (17) et une deuxième ouverture (25) en regard de la première, et dans lequel le système de serrage comprend une tige (29) apte à être engagée dans ces ouvertures (25, 27), de manière à traverser ladite boucle.

12. Collier de serrage selon l'une quelconque des revendications 1 à 11, dans lequel le système de serrage comprend un ensemble vis/écrou dont la tige (29) de la vis traverse ladite boucle (5), la tête de la vis (31) ou l'écrou (33) venant en prise, directement ou via un élément intermédiaire (35), sur la paroi de serrage (17) de la boucle.

## Claims

1. A clamping collar comprising:
- a belt comprising a strip (3) and two free ends, at least one of said ends being curved back to form a loop (5), said loop being defined by an outer belt portion (7) and by an underlying inner belt portion (9); and
- a tightening system for co-operating with said loop so as to tighten said belt;
wherein said at least one free end forms a loop which is curved back towards the inside of the collar, said inner belt portion (9) extending beyond the loop (5), under said strip (3),
the collar being **characterized in that** said outer belt portion (7) presents a tightening wall (17) with which the tightening system comes into engagement, so that the forces exerted on the loop by the tightening system are exerted on the outer belt portion, via the outside of the loop, and **in that** said inner belt portion (9) is not fastened under said strip (3).

2. A clamping collar according to claim 1, in which the two free ends of said belt are curved back in such a manner as to form a loop (5), and in which said tightening system makes it possible to bring said loops (5) closer together so as to tighten said belt.

3. A clamping collar according to claim 1 or claim 2, in which only one free end of said belt is curved back in such a manner as to form a loop (5).

4. A clamping collar according to any one of claims 1 to 3, including an abutment for preventing the inner belt portion (9) from moving along the strip (3), while the collar is being tightened.

5. A clamping collar according to any one of claims 1 to 4, in which said strip (3) has a shoulder (45) against which said inner belt portion (9) comes into abutment, while the collar is being tightened.

6. A clamping collar according to claim 5, in which the height of said shoulder (45) is at least substantially equal to the thickness of said inner belt portion (9).

7. A clamping collar according to claim 5 or claim 6, further comprising guide means (47, 49) for keeping the inner belt portion (9) aligned with the strip (3).

8. A clamping collar according to any one of claims 1 to 7, in which the outer belt portion (7) presents a pushed-in portion (15), set back relative to the outer outline of the loop, which pushed-in portion (15) defines said tightening wall (17).

9. A clamping collar according to claim 8, in which the pushed-in portion (15) is flanked on either side by respective ones of two edge segments (19) of the outer belt portion (7).

10. A clamping collar according to any one of claims 1 to 9, presenting a section that is generally circular in shape, in which collar the tightening wall (17) extends substantially radially.

11. A clamping collar according to any one of claims 1 to 10, in which said loop (5) has a first opening (27) provided in its tightening wall (17) and a second opening (25) in register with the first opening, and in which the tightening system comprises a shank (29) suitable for being engaged in said openings (25, 27), in such a manner as to pass through said loop.

12. A clamping collar according to any one of claims 1 to 11, in which the tightening system comprises a nut-and-bolt assembly having the shank (29) of its bolt passing through said loop (5), the bolt head (31) or the nut (33) coming respectively into engagement directly or via a spacer (35) against the tightening wall (17) of the loop.

## Patentansprüche

1. Klemmschelle umfassend:
- einen Ring mit einem Band (3) und zwei freien Enden, wobei wenigstens eines dieser freien Enden derart umgebogen ist, daß es eine Schlaufe (5) bildet, wobei diese Schlaufe durch einen äußeren Ringabschnitt (7) und einen darunterliegenden inneren Ringabschnitt (9) begrenzt ist, sowie
- ein Klemmsystem, das geeignet ist, mit der Schlaufe zusammenzuwirken, um den Ring festzuziehen,
wobei das wenigstens eine freie Ende eine zur Innenseite der Schelle umgebogene Schlaufe bildet, wobei der innere Ringabschnitt (9) sich jenseits der Schlaufe (5) unter dem Band (3) fortsetzt,
wobei diese Schelle **dadurch gekennzeichnet ist, daß** der äußere Ringabschnitt (7) eine Klemmwand (17) aufweist, mit der das Klemmsystem in Eingriff gelangt, so daß die durch das Klemmsystem auf die Schlaufe ausgeübten Kräfte sich auf den äußeren Ringabschnitt über die Außenseite der Schlaufe auswirken, und daß der innere Ringabschnitt (9) unter dem Band (3) nicht befestigt ist.

2. Klemmschelle nach Anspruch 1, wobei die beiden freien Enden des Rings derart umgebogen sind, daß sie eine Schlaufe (5) bilden, und wobei das Klemmsystem ermöglicht, die Schlaufen (5) einander zu nähern, um den Ring festzuziehen.

3. Klemmschelle nach Anspruch 1 oder 2, wobei ein einziges freies Ende des Rings derart umgebogen ist, daß es eine Schlaufe (5) bildet.

4. Klemmschelle nach einem der Ansprüche 1 bis 3, umfassend einen Anschlag, um den inneren Ringabschnitt (9) daran zu hindern, sich während des Festziehens der Schelle entlang dem Band (3) zu bewegen.

5. Klemmschelle nach einem der Ansprüche 1 bis 4, wobei das Band (3) eine Schulter (45) aufweist, an der der innere Ringabschnitt (9) während des Festziehens der Schelle in Anschlag gelangt.

6. Klemmschelle nach Anspruch 5, wobei die Höhe der Schulter (45) wenigstens im wesentlichen gleich der Dicke des inneren Ringabschnitts (9) ist.

7. Klemmschelle nach Anspruch 5 oder 6, umfassend Führungsmittel (47, 49), um die Ausrichtung des inneren Ringabschnitts (9) mit dem Band (3) beizubehalten.

8. Klemmschelle nach einem der Ansprüche 1 bis 7, wobei der äußere Ringabschnitt (7) einen vertieften, gegenüber der Außenkontur der Schlaufe zurückspringenden Teil (15) aufweist, der die Klemmwand (17) definiert.

9. Klemmschelle nach Anspruch 8, wobei der vertiefte Teil (15) seitlich von zwei Randsegmenten (19) des äußeren Ringabschnitts (7) eingefaßt ist.

10. Klemmschelle nach einem der Ansprüche 1 bis 9, mit einem allgemein kreisförmigen Querschnitt, wobei die Klemmwand (17) im wesentlichen radial ausgerichtet ist.

11. Klemmschelle nach einem der Ansprüche 1 bis 10, wobei die Schlaufe (5) eine erste Öffnung (27), welche in ihrer Klemmwand (17) ausgebildet ist, und eine der ersten gegenüberliegende zweite Öffnung (25) aufweist, und wobei das Klemmsystem einen Stift (29) umfaßt, der geeignet ist, in diese Öffnungen (25, 27) eingesteckt zu werden, so daß er die Schlaufe durchgreift.

12. Klemmschelle nach einem der Ansprüche 1 bis 11, wobei das Klemmsystem eine Schraube/Mutter-Anordnung umfaßt, deren Schraubenstift (29) die Schlaufe (5) durchgreift, wobei der Schraubenkopf (31) oder die Mutter (33) direkt oder über ein Zwischenelement (35) an der Klemmwand (17) der Schlaufe in Eingriff gelangt.
